# EUROPEAN PATENT SPECIFICATION

(11) **EP 2 328 331 B1**
(45) Date of publication and mention of the grant of the patent: **19.09.2018**
(21) Application number: 10192261.5
(22) Date of filing: 23.11.2010
(51) Int. Cl.: H04M 1/725, G06Q 10/10, H04L 12/58

(54) **Mobile terminal and method of providing email services in the mobile terminal**
Mobiles Endgerät und Verfahren zur Bereitstellung von E-Mail-Diensten in einem mobilen Endgerät
Terminal mobile et procédé de fourniture de services de messagerie électronique dans le terminal mobile

(30) Priority: 25.11.2009 KR 20090114529; 30.11.2009 KR 20090116546; 10.12.2009 KR 20090122313
(43) Date of publication of application: 01.06.2011
(73) Proprietor: LG Electronics Inc., Seoul 07336 (KR)
(72) Inventor: Chu, Sunghwa, 153-803, SEOUL (KR); Jun, Insu, 153-803, SEOUL (KR); Kang, Hokyun, 153-803, SEOUL (KR)
(74) Representative: Cabinet Plasseraud

(56) References cited:
- US-A1- 2008 256 206
- US-A1- 2009 111 422
- Apple: "iPhone User Guide (For iOS 3.1 Software)", , 9 September 2009 (2009-09-09), XP055004252, Retrieved from the Internet: URL:http://manuals.info.apple.com/en_US/iP hone_iOS3.1_User_Guide.pdf [retrieved on 2011-08-08]

## Description

### FIELD OF THE INVENTION

The present invention relates to a mobile terminal and a method of providing email services in the mobile terminal.

### BACKGROUND OF THE INVENTION

Push email services are used to notify a mobile terminal immediately when an email is received at an email server. Thus, the push email services require continuous connection between the mobile terminal and the email server to secure continuity of data transfer.

Accordingly, the mobile terminal needs to maintain continuous connection with the email server even when no data regarding push emails is transmitted between the mobile terminal and the email server. For this reason, the mobile terminal may consume power unnecessarily. Document Apple: "iPhone user guide (For iOS 3.1 Software)", 9 September 2009, http://manuals.info.apple.com/en_US/iPhone_iOS3.1_User_Guide.pdf discloses a device which can be switched between a push email mode and a polling email mode. US2009/111422 discloses methods of controlling the behaviour of a mobile terminal on the basis of geographic location, for example to take account of local laws.

### SUMMARY OF THE INVENTION

The present invention provides a mobile terminal and a method of providing email services in the mobile terminal for minimizing unnecessary connections between the mobile terminal and an email server, thus minimizing power consumption by the mobile terminal.

According to an embodiment of the present invention, a mobile terminal according to claim 1 is provided.

### BRIEF DESCRIPTION OF THE DRAWINGS

The accompanying drawings, which are included to provide further understanding of the disclosure and are incorporated in and constitute a part of this application, illustrate embodiment(s) of the disclosure and together with the description serve to explain the principle of the disclosure.
FIG. 1 is a block diagram of a mobile terminal according to an embodiment of the present invention.
FIG. 2 illustrates a service network related to an embodiment of the present invention.
FIG. 3 is a flowchart illustrating providing email services in a mobile terminal according to an embodiment of the present invention.
FIG. 4 illustrates communication between a mobile terminal and a server providing email services according an embodiment of the present invention.
FIG. 5 is a flowchart illustrating providing email services in a mobile terminal according to another embodiment of the present invention.
FIG. 6 is a flowchart illustrating providing email services in a mobile terminal according to yet another embodiment of the present invention.
FIG. 7 illustrates a service network related to another embodiment of the present invention.
FIG. 8 is a flowchart illustrating providing email services in a mobile terminal according to yet another embodiment of the present invention.
FIGS. 9-11 are screen views of a mobile terminal performing a function related to email services according to yet another embodiment of the present invention.
FIG. 12 is a flowchart illustrating providing email services in a mobile terminal according to yet another embodiment of the present invention.
FIG. 13 is a screen view of a mobile terminal performing a function related to email services according to yet another embodiment of the present invention.
FIG. 14 is a flowchart illustrating providing email services in a mobile terminal according to yet another embodiment of the present invention.
FIG. 15 is a screen view of a mobile terminal performing a function related to email services according to yet another embodiment of the present invention.
FIG. 16 is a flowchart illustrating providing email services in a mobile terminal according to yet another embodiment of the present invention.
FIG. 17 illustrates a service network related to yet another embodiment of the present invention.
FIG. 18 is a flowchart illustrating providing email services in a mobile terminal according to yet another embodiment of the present invention.
FIGS. 19-21 illustrate a method of providing email services in a mobile terminal according to yet another embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art. In the following description, suffixes "module" and "unit" are given to components of the mobile terminal in consideration of only facilitation of description and do not have meanings or functions discriminated from each other.

The mobile terminal described in the specification may include a cellular phone, a smart phone, a laptop computer, a digital broadcasting terminal, a personal digital assistant (PDA), a portable multimedia player (PMP), and a navigation system, for example. However, those skilled in the art will easily understand that configurations according to embodiments of the present invention can also be applied to stationary terminals such as digital TVs and desktop computers except a case where the configurations can be applied to only mobile terminals.

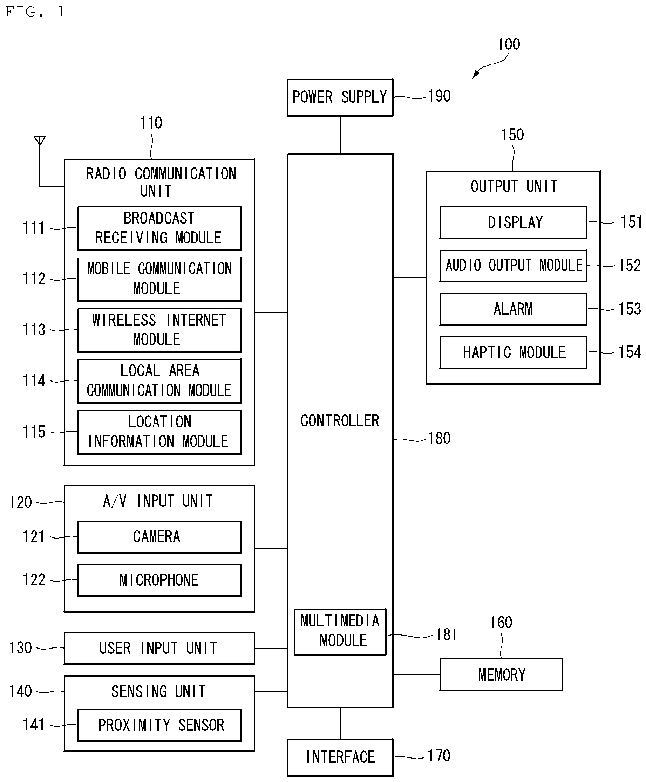

FIG. 1 is a block diagram of a mobile terminal 100 according to an embodiment of the present invention. Other embodiments, configurations and arrangements may also be provided. As shown, the mobile terminal 100 may include a radio communication unit 110, an audio/video (A/V) input unit 120, a user input unit 130, a sensing unit 140, an output unit 150, a memory 160, an interface 170, a controller 180, and a power supply 190. Not all of the components shown in FIG. 1 may be essential parts and the number of components included in the mobile terminal 100 may be varied. The components of the mobile terminal 100 will now be described.

The radio communication unit 110 may include at least one module that enables radio communication between the mobile terminal 100 and a radio communication system or between the mobile terminal 100 and a network in which the mobile terminal 100 is located. For example, the radio communication unit 110 may include a broadcasting receiving module 111, a mobile communication module 112, a wireless Internet module 113, a local area communication module 114, and a location (or position) information module 115.

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The local area communication module 114 may correspond to a module for local area communication. Further, Bluetooth®, radio frequency identification (RFID), infrared data association (IrDA), ultra wideband (UWB) and/or ZigBee® may be used as a local area communication technique.

The location information module 115 may confirm or obtain the position of the mobile terminal 100. The position information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan among others.

A global positioning system (GPS) module is a representative example of the location information module 115. The GPS module 115 may calculate information on distances between one point or object and at least three satellites and information on a time when the distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. In addition, the GPS module 115 may continuously calculate the current position in real time and calculate velocity information using the location or position information.

As shown in FIG. 1, the AN input unit 120 may input an audio signal or a video signal and include a camera 121 and a microphone 122. The camera 121 may process image frames of still images or moving images obtained by an image sensor in a video telephony mode or a photographing mode. The processed image frames may be displayed on a display 151 which may be a touch screen.

The image frames processed by the camera 121 may be stored in the memory 160 or may be transmitted to an external device through the radio communication unit 110. The mobile terminal 100 may also include at least two cameras 121.

The microphone 122 may receive an external audio signal in a call mode, a recording mode or a speech recognition mode and process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and generate a sensing signal for controlling operation of the mobile terminal 100. For example, in case of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141.

The output unit 150 may generate visual, auditory and/or tactile output and may include the display 151, an audio output module 152, an alarm 153 and a haptic module 154. The display 151 may display information processed by the mobile terminal 100. The display 151 may display a user interface (Ul) or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

In addition, the display 151 may include at least one of a liquid crystal display, a thin film transistor liquid crystal display, an organic light-emitting diode display, a flexible display and a three-dimensional display. Some of these displays may be of a transparent type or a light transmissive type. That is, the display 151 may include a transparent display.

The transparent display may include a transparent liquid crystal display. The rear structure of the display 151 may also be of a light transmissive type. Accordingly, a user may see an object located behind the body of the mobile terminal 100 through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

Further, when the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 of the sensing unit 140 may be located in an internal region of the mobile terminal 100, surrounded by the touch screen, or near the touch screen. The proximity sensor 141 may sense an object approaching a predetermined sensing face or an object located near the proximity sensor using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of convenience of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the radio communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and the like. The audio output module 152 may output sounds through an earphone jack. The user may hear the sounds by connecting an earphone to the earphone jack.

The alarm 153 may output a signal for indicating generation of an event of the mobile terminal 100. For example, alarms may be generated when receiving a call signal, receiving a message, inputting a key signal, or inputting touch. The alarm 153 may also output signals in forms different from video signals or audio signals, for example, a signal for indicating generation of an event through vibration. The video signals or the audio signals may also be output through the display 151 or the audio output module 152.

The haptic module 154 may generate various haptic effects that the user can feel. One example of the haptic effects is vibration. The intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operation of the controller 180 and temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk or an optical disk. The mobile terminal 100 may also operate in relation to a web storage performing the storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and a universal subscriber identify module (USIM). An identification device including the user identification module may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 as shown in FIG. 1 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments of the present disclosure may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. The embodiments may be implemented by the controller 180.

According to software implementation, embodiments such as procedures or functions may be implemented with a separate software module executing at least one function or operation. Software codes may be implemented according to a software application written in an appropriate software language. The software codes may be stored in the memory 160 and executed by the controller 180.

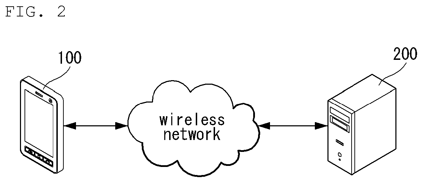

Referring to FIG. 2, the mobile terminal 100 is linked to an email server 200 that pushes emails through a wireless network. For the mobile terminal 100 to receive emails in a push mode, the mobile terminal 100 needs to be continuously connected with the email server 200. Here, the push mode means an email receiving mode in which the mobile terminal 100 is linked to the email server 200 that is always in an "on" state to receive emails, and the email server 200 delivers emails to an email account registered by a user of the mobile terminal 100.

If the mobile terminal 100 continuously maintains the connection with the email server 200 to provide email services even when there is little chance that an email will be delivered to the email server 200, for example, after midnight, the mobile terminal 100 may consume power unnecessarily and wireless resources may be wasted. The present invention is provided to solve such a problem.

In the following embodiments to be discussed, the mobile terminal 100 analyzes a pattern of receiving emails from the email server 200 according to time and provides the email services in the push mode or a polling mode based on the analyzed pattern. Here, the polling mode means an email receiving mode in which the mobile terminal 100 is periodically linked to the email server 200 to receive emails, the email server 200 delivering the emails to the email account registered by the user.

The following exemplary embodiment may be implemented in the mobile terminal 100 described with reference to FIGS. 1 and 2. Although the initial email receiving mode of the mobile terminal 100 is the push mode in the following exemplary embodiment, the present invention is not limited thereto. The initial email receiving mode of the mobile terminal 100 may be the polling mode.

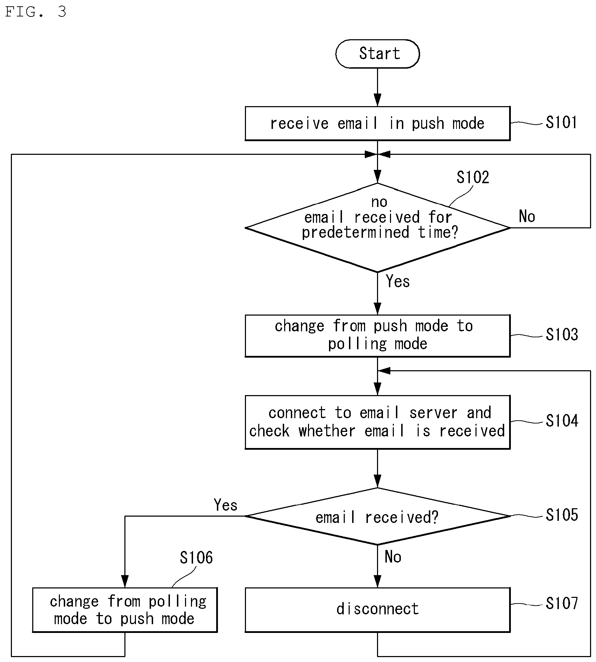

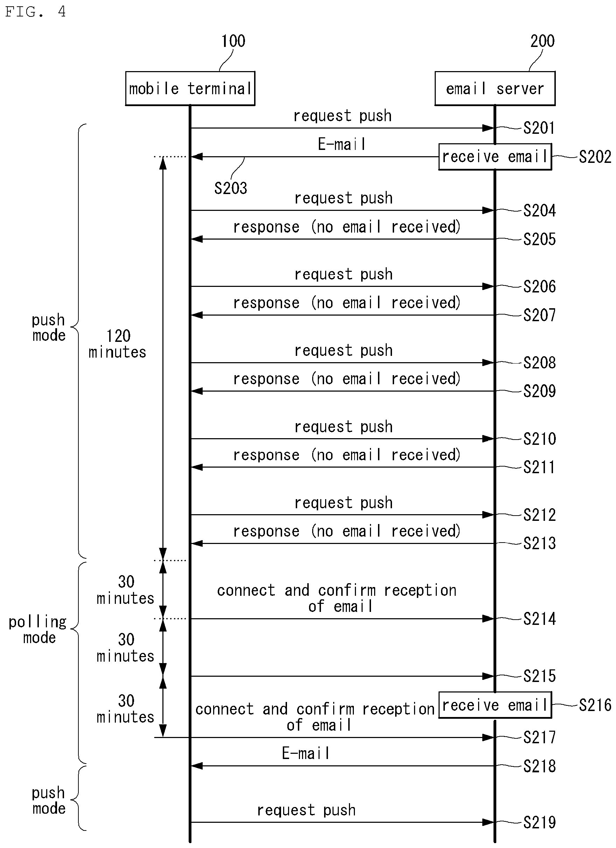

FIG. 3 illustrates a method of providing email services in the mobile terminal 100 according to the first exemplary embodiment. FIG. 4 illustrates switching between the push mode and the polling mode in the mobile terminal 100 according to the method illustrated in FIG. 3.

Referring to FIGS. 1-3, the controller 180 connects the mobile terminal 100 to the email server 200 through the wireless communication unit 110 and receives emails in the push mode (S101). The controller 180 connects the mobile terminal 100 to the email server 200 that is always in the "on" state through the wireless communication unit 110. When there is an email delivered to an email account previously registered by the user of the mobile terminal 100, the controller 180 receives the email from the email server 200.

While the mobile terminal 100 is operating in the push mode, the controller 180 continuously checks whether any new email is received from the email server 200. If no new email is received from the email server 200 for a predetermined time (S102), the controller 180 controls the wireless communication unit 110 to disconnect the mobile terminal 100 from the email server 200. Furthermore, the controller 180 changes or switches the email receiving mode from the push mode to the polling mode (S103).

When the email receiving mode is changed to the polling mode, the controller 180 periodically connects the mobile terminal 10 to the email server 200 through the wireless communication unit 140. Subsequently, the controller 180 checks whether any new email is received from the email server 200 (S104). If there is an email delivered to the registered email account, the controller 180 receives the email from the email server 200 (S105) and the controller 180 switches the email receiving mode from the polling mode to the push mode (S106).

If there is no email received from the email server 200 (S105), the controller 180 controls the wireless communication unit 110 to disconnect the mobile terminal 100 from the email server 200 (S107). Further, the controller 180 waits for the next connection between the mobile terminal 100 and the email server 200 based on a polling period.

Referring to FIG. 4, the mobile terminal 100 is linked to the email server 200 that is always in the "on" state when operating in the push mode. The mobile terminal 100 periodically transmits a push request message to the email server 200 (S201, S204, S206, S208, S210 and S212). In particular, the mobile terminal 100 transmits the push request message to the email server 200 for a predetermined time to maintain the connection with the email server 200 even when no email is received (S204, S206, S208, S210 and S212).

When the email server 200 is linked to the mobile terminal 100 in the "on" state, that is, when the mobile terminal 100 operates in the push mode, if an email arrives at the email account registered by the user (S202), the email server 200 transmits the email to the mobile terminal 100 (S203). If no email is received at the email account, the email server 200 transmits a response message, indicating that no email has been received, to the mobile terminal 100 (S205, S207, S209, S211 and S213).

When no email is received from the email server 200 for a predetermined time in the push mode, the mobile terminal 100 cancels the connection with the email server 200 and changes from the push mode to the polling mode. To change the email receiving mode from the push mode to the polling mode, the mobile terminal 100 may calculate a time period for which no email is received by various methods.

For example, the mobile terminal 100 may calculate the time period for which no email is received by using a timer or a counter. Referring to FIG. 4, the mobile terminal 100 may count the time period for which no email is received by using the counter and, if no email is received from the email server 200 for 120 minutes, for example the mobile terminal 100 changes the email receiving mode to the polling mode.

Furthermore, the mobile terminal 100 may transmit the push request message to the email server 200 and count the number of times the response message is received to calculate the time period for which no email is received when the response message indicates that no email has been received from the email server 200. Referring to FIG. 4, the mobile terminal 100 counts the number of times the response message is received indicating that no email has been received from the email server 200, in response to the push request message. If the response message is received more than five times in a continuous manner, the mobile terminal 100 switches the email receiving mode from the push mode to the polling mode.

The mobile terminal 100 in the polling mode is periodically connected to the email server 200 based on the polling period to check whether any new email has been received instead of maintaining continuous connection with the email server 200 (S214 and S215). If the polling period is thirty minutes, as exemplified in FIG. 4, the mobile terminal 100 is connected to the email server 200 every thirty minutes to check whether any new email has been received.

If the email server 200 receives an email in the polling mode (S216), the mobile terminal 100 confirms receipt of the email through the periodic connection with the email server 200, and then receives the email from the email server 200 (S218). Then, the mobile terminal 100 switches the email receiving mode from the polling mode to the push mode, and transmits the push request message to the email server 200 while maintaining the connection with the email server 200 that is always in the "on" state (S219).

As described in the above embodiment, the connection between the mobile terminal 100 and the email server 200 is cancelled and the email receiving mode is switched from the push mode to the polling mode if no new email is received for a predetermined time. Thus, power consumption to maintain unnecessary connection between the mobile terminal 100 and the email server 200 can be minimized.

A method of providing email service in a mobile terminal according to a second exemplary embodiment and an operation of the mobile terminal 100 for implementing the method will now be explained. The second exemplary embodiment can be implemented in the mobile terminal 100 described with reference to FIGS. 1 and 2.

The initial email receiving mode of the mobile terminal 100 is the push mode in the second exemplary embodiment. However, the present invention is not limited thereto. The initial email receiving mode of the mobile terminal 100 may be the polling mode.

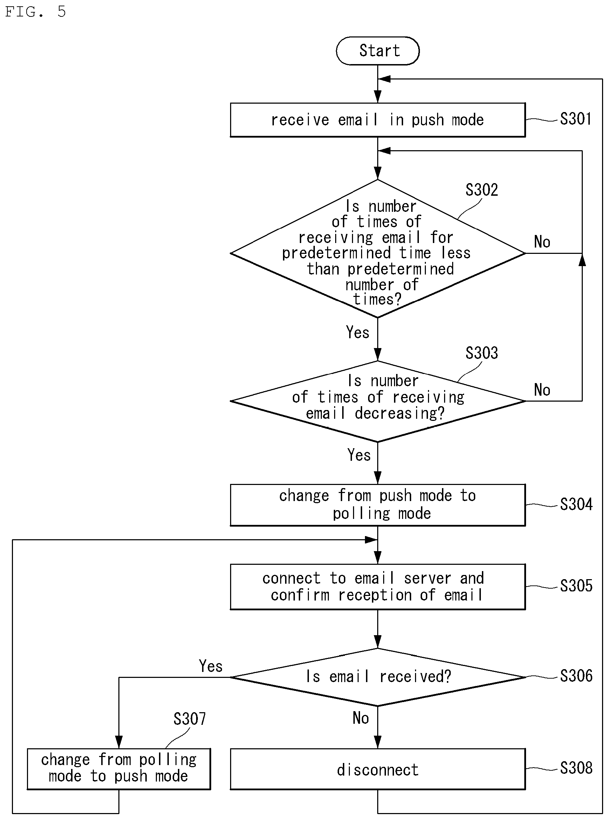

Operations S305, S306, S307 and S308 shown in FIG. 5, which illustrate the method of providing email services according to the second exemplary embodiment, are identical to operations S104, S105, S106 and S107 shown in FIG. 3 that illustrate the method of providing email services according to the first exemplary embodiment. Thus, detailed explanations thereof are omitted.

Referring to FIGS. 1, 2 and 5, the controller 180 connects the mobile terminal 100 to the email server 200 through the wireless communication unit 110 to receive emails in the push mode (S301). In the push mode, the controller 180 continuously checks the number of times emails from the email server 200 are received and the frequency of email reception. Further, the controller 180 confirms whether the number of times emails are received for a predetermined time is less than a predetermined number of times (S302). Furthermore, the controller 180 confirms whether the number of times emails are received from the email server 200 has decreased for the predetermined time (S303).

If the number of times emails are received for the predetermined time is less than the predetermined number of times and is decreasing constantly, the controller 180 controls the wireless communication unit 100 to cancel the connection between the mobile terminal 100 and the email server 200. Then, the controller 180 switches the email receiving mode from the push mode to the polling mode (S304).

As the email receiving mode is switched to the polling mode, the controller 180 periodically connects the mobile terminal 100 to the email server 200 to confirm reception of an email until an email delivered to the email server 200 is confirmed in S305, S306, S307 and S308. In this embodiment, as described above, if the number of times emails are received continuously decreases and is less than the predetermined number of times, the connection between the mobile terminal 100 and the email server 200 is cancelled and the email receiving mode is switched from the push mode to the polling mode. Thus, power consumption to maintain unnecessary connection between the mobile terminal 100 and the email server 200 can be minimized.

A method of providing email services in a mobile terminal according to a third exemplary embodiment and an operation of the mobile terminal 100 for implementing the method will now be explained. The third exemplary embodiment can be implemented in the mobile terminal 100 described with reference to FIGS. 1 and 2.

The initial email receiving mode of the mobile terminal 100 corresponds to the push mode in the third exemplary embodiment. However, the present invention is not limited thereto. The initial email receiving mode of the mobile terminal 100 may be the polling mode.

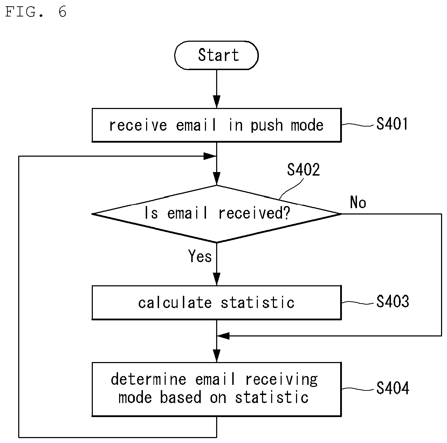

Referring to FIGS. 1, 2 and 6, the controller 180 connects the mobile terminal 100 to the email server 200 through the wireless communication unit 110 to receive emails in the push mode when the email service starts (S401). When email is received (S402), the controller 180 calculates statistics with respect to reception of emails and stores the statistics in the memory 160 (S403). Here, the statistics with respect to reception of emails may be the average number of times emails are received for each of multiple time periods.

The controller 180 selects one of the push mode and the polling mode as the email receiving mode based on the statistics (S404). That is, the controller 180 selects the push mode as the email receiving mode in a time period for which the average number of times emails are received exceeds a predetermined or preset number of times and selects the polling mode as the email receiving mode in a time period for which the average number of times of emails are received is less than the predetermined or preset number of times.

Table 1 shows an exemplary statistic with respect to reception of emails. In Table 1, a single day is divided into eight three-hour periods and the average number of times emails are received for each of the eight periods is shown.

**Table 1**

| Time period 12 | am to 3 am | 3 am to 6 am | 6 am to 9 am | 9 am to 12 pm | 12 pm to 3 pm | 3 pm to 6 pm | 6 pm to 9 pm | 9 pm to 12 am |
|---|---|---|---|---|---|---|---|---|
| Average number of times emails are received | 0 | 0 | 7 | 15 | 33 | 45 | 30 | 5 |

Referring to Table 1, if the predetermined number of times, which is the threshold for selection of one of the push mode and the polling mode as the email receiving mode, is 5, the mobile terminal 100 operates in the polling mode from 12 am to 6 am and operates in the push mode from 6 am to 12 am for a day. In other words, when less than 5 emails are received during the time period, for example, 12 am to 3 am and 3 am to 6 am in Table 1, the mobile terminal 100 operates in the polling mode, and when 5 or more emails are received during the time period, for example, all other time periods except for 12 am to 3 am and 3 am to 6 am, the mobile terminal 100 operates in the push mode.

Therefore, the statistic needs to be updated continuously with respect to reception of emails such that the statistic is applicable even when an email receiving pattern of the user is changed. For example, if a single day is divided into multiple time periods and the average number of times emails are received for each time period is calculated and used as the statistic, then the statistic should be updated everyday. If the average number of times emails are received for each day is calculated and used as the statistic, then the statistic should be updated every week.

In the third exemplary embodiment, as described above, the email receiving pattern is analyzed, and the connection between the mobile terminal 100 and the email server 200 is cancelled and the email receiving mode is switched from the push mode to the polling mode in a time period for which it is determined that continuous connection between the mobile terminal 100 and the email server 200 is not necessary. Thus, power consumption to maintain unnecessary connection between the mobile terminal 100 and the email server 200 is minimized.

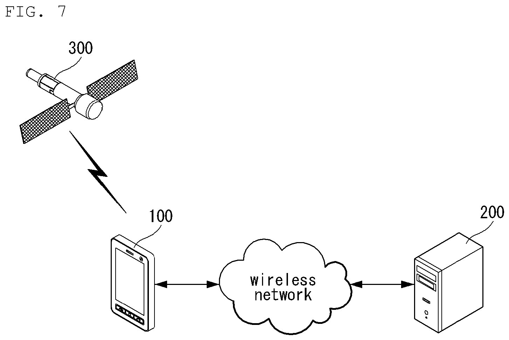

Referring to FIG. 7, the mobile terminal 100 is connected to the email server 200 that pushes emails through a wireless network and needs to continuously maintain the connection to the email server 200 when a push email function is activated. If the user can confirm emails by using a wired network device, such as a computer, by which emails can be checked, activation of the push email function of the mobile terminal 100 may cause unnecessary power consumption of the mobile terminal 100.

Thus, to avoid unnecessary power consumption by the mobile terminal 100, it may be desirable that the push email function of the mobile terminal 100 be activated only when the user needs to confirm emails in an environment where the wired network device does not exist. Accordingly, the mobile terminal 100 can be set up such that the mobile terminal enters a push email function activation mode or a push email function deactivation mode according to its location. The location information for determining the activation/deactivation mode may be stored in the mobile terminal 100 by the user. Furthermore, the mobile terminal 100 determines whether the push email function is activated based upon location information of the mobile terminal 100 that is acquired through a GPS satellite 300 and the location information corresponding to the push email function activation mode or the push email function deactivation mode.

A method of providing email services in a mobile terminal according to a fourth exemplary embodiment and an operation of the mobile terminal 100 for implementing the method will now be explained. The fourth exemplary embodiment can be implemented in the mobile terminal 100 described with reference to FIGS. 1 and 7.

When the push email function is deactivated, the connection between the mobile terminal 100 and the email server 200 is cancelled and the mobile terminal 100 and the email server 200 remain disconnected until the push email function is activated in the fourth exemplary embodiment. However, the present invention is not limited thereto. When the push email function is deactivated, the mobile terminal 100 may operate in the polling mode in which the mobile terminal 100 is connected to the email server 200 periodically or at specific time points to confirm received emails.

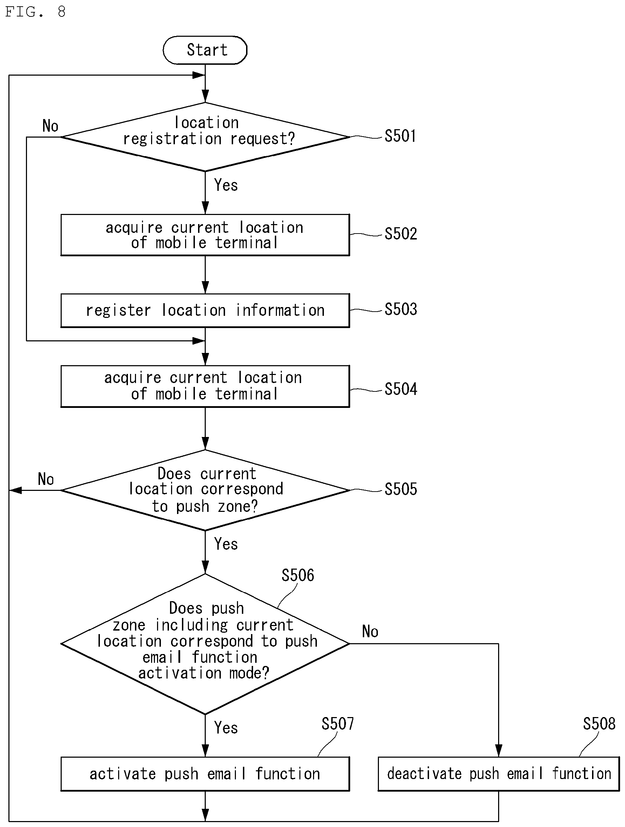

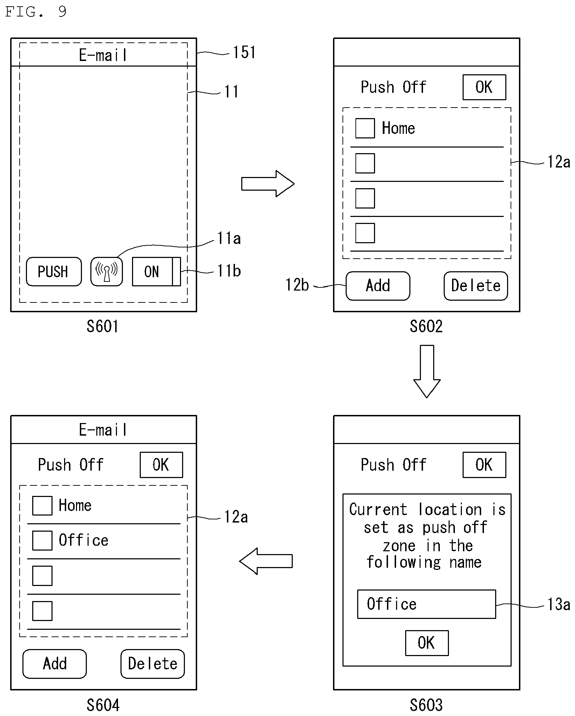

FIG. 8 is a flowchart illustrating the method of providing email services in the mobile terminal 100 according to the fourth exemplary embodiment. FIGS. 9-11 are screen views of the mobile terminal 100 on which the email service is performed.

Referring to FIGS. 1, 7, and 8, when a location registration request is received through the user input unit 130 (S501), the controller 180 acquires the current location of the mobile terminal 100 through the location information module 115 (S502). Further, the controller 180 registers location information corresponding to the current location, which is transmitted from the location information module 115, in a location information database (S503). Here, the location information database manages information on locations corresponding to one of the push email function activation mode and the push email function deactivation mode. Hereinafter, the location registered in the location information database, that is, the location corresponding to one of the push email function activation mode and the push email function deactivation mode, is referred to as "push zone" for ease of description.

The location information stored in the location information database may include activation information that represents which one of the push email function activation mode and push email function deactivation mode corresponds to the location corresponding to the location information. The activation information may be set by various methods.

For example, the activation information may be determined according to the default mode of the push email function. FIG. 9 illustrates registering location information about a push zone in the location information database.

Referring to FIG. 9, when the user selects a GPS icon 11a on an email setting screen 11 (S601), a push zone list 12a registered in the location information database is displayed on the display 151 (S602). Here, push zones belonging to the push zone list 12a may be selected depending on the default mode of the push email function. If the default mode corresponds to an activation mode, push zones operating in the deactivation mode are displayed on the push zone list 12a. On the other hand, when the default mode corresponds to a deactivation mode, push zones operating in the activation mode are displayed on the push zone list 12a. The default mode of the push email function can be set through a state icon 11b of the email setting screen 11.

When the user selects an "Add" icon 12b on the screen displaying the push zone list 12a, an input window 13a, through which the name of a push zone that will be newly registered is received, is displayed on the display 151 (S603). When the name of the push zone that will be newly registered is received through the input window 13a, location information including the current location of the mobile terminal 100 is matched to the name input by the user and registered in the location information database. That is, the location information is registered as a push zone. Then, the updated push zone list 12a including the newly registered push zone is displayed through the display 151 (S604). Here, activation information is set to the newly registered push zone such that the newly registered push zone corresponds to one of the activation mode and the deactivation mode according to the default mode of the push email function. That is, the activation information of the newly registered push zone may be set such that the activation information corresponds to a mode that is different from the default mode of the push email function.

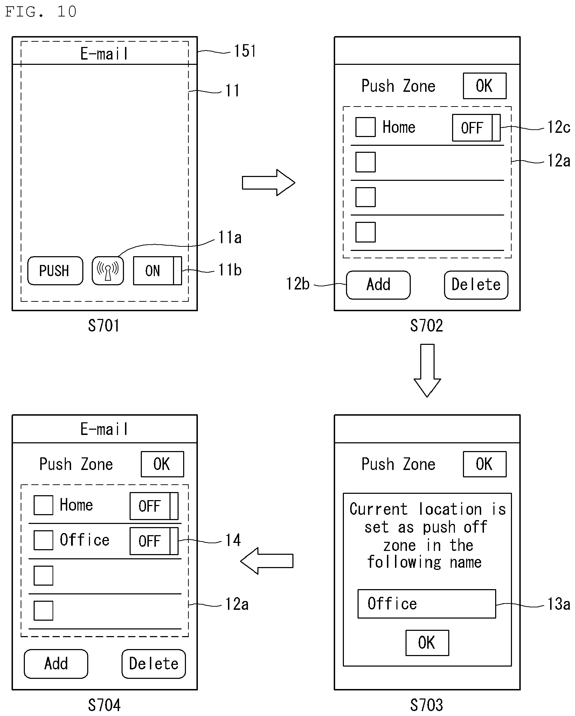

Furthermore, the activation information may be selected by the user. FIG. 10 illustrates an alternative exemplary operation of registering location information in the location information database.

Referring to FIG. 10, when the user selects the GPS icon 11a on the email setting screen 11 (S701), the push zone list 12a including push zones registered in the location information database is displayed on the display 151 (S702). Here, the push zone list 12a may include both push zones corresponding to the activation mode and push zones corresponding to the deactivation mode. The push zone list 12a includes an activation mode icon 12c by which one of the activation mode and the deactivation mode can be selected for each of the push zones belonging to the push zone list 12a.

When the user selects the "Add" icon 12b on the screen displaying the push zone list 12a, the input window 13a, through which the name of a push zone to be added is received, is displayed through the display 151 (S703). When the name of the push zone to be added is received through the input window 13a, the location information on the current location of the mobile terminal 100 is matched to the input name and registered in the location information database. Accordingly, the updated push zone list 12a including the newly added push zone is displayed through the display 151 (S704), and the user can set the activation mode of the added push zone by selecting an activation icon 14. The activation state of the push zone, an activation mode or a deactivation mode, selected through the activation icon 14, is stored in the activation information of the corresponding location information.

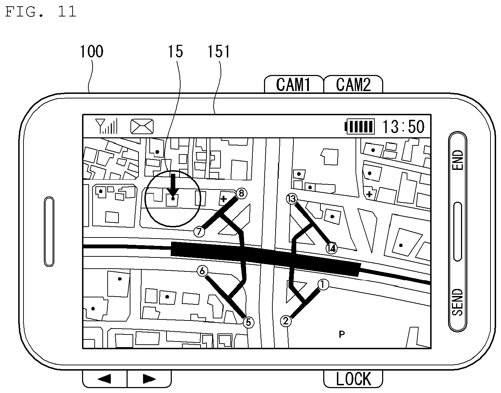

In exemplary embodiments of this document, when the user selects one of the push zones included in the push zone list 12a, the selected push zone may be displayed through the display 151. FIG. 11 illustrates an exemplary image displaying a push zone. Referring to FIG. 11, the controller 180 may display a push zone 15 selected by the user using map data previously stored in the memory 160.

Referring back to FIG. 8, the controller 180 continuously acquires the current location of the mobile terminal 100 through the location information module 115 (S504). Further, the controller 180 confirms whether the current location of the mobile terminal 100, transmitted from the location information module 115, corresponds to a push zone. That is, the controller 180 searches the location information database for location information including the current location (S505).

If the current location of the mobile terminal 100 corresponds to the push zone, the controller 180 confirms the activation mode corresponding to the push zone including the current location. That is, the controller 180 confirms which one of the push email function activation mode and the push email function deactivation mode corresponds to the push zone including the current location (S506). If the push zone including the current location corresponds to the push email function activation mode, the controller 180 activates the push email function of the mobile terminal 100 (S507). Furthermore, the controller 180 sets up or maintains the connection between the mobile terminal 100 and the email server 200 for activation of the push email function.

If the push zone including the current location corresponds to the push email function deactivation mode, the controller 180 deactivates the push email function of the mobile terminal 100 (S508). Further, the controller 180 disconnects the mobile terminal 100 from the email server 200.

When the mobile terminal 100 is located in a push zone, the push email function activation mode or the push email function deactivation mode is selected based upon the activation mode corresponding to the push zone in which the mobile terminal 100 is located in the fourth exemplary embodiment. However, the present invention is not limited thereto.

When the mobile terminal 100 is located in a push zone, the push email function activation mode or the push email function deactivation mode may be selected based upon the current default mode of the push email function. That is, if the current default mode of the push email function corresponds to the activation mode, the push email function is in the deactivation mode when the mobile terminal 100 is located in the push zone. On the other hand, if the current default mode of the push email function corresponds to the deactivation mode, the push email function is in the activation mode when the mobile terminal 100 is located in the push zone.

Furthermore, when the mobile terminal 100 is located in the push zone, the push email function activation mode or the push email function deactivation mode may be selected based upon one of the current default mode of the push email function and the activation mode corresponding to the push zone in which the mobile terminal 100 is located. That is, when the activation mode corresponding to the push zone in which the mobile terminal 100 is located is set to one of the activation mode and the deactivation mode, the push email function of the mobile terminal 100 is selected based on the activation mode corresponding to the push zone in which the mobile terminal 100 is located. If the activation mode corresponding to the push zone in which the mobile terminal 100 is located is not set to one of the activation mode and the deactivation mode, one of the push email function activation mode and the push email function deactivation mode is selected based on the current default mode of the push email function.

A method of providing email services in a mobile terminal 100 according to a fifth exemplary embodiment and an operation of the mobile terminal 100 for implementing the method will now be explained. The fifth exemplary embodiment may be implemented in the mobile terminal 100 described with reference to FIGS. 1 and 7.

When the push email function is deactivated, the connection between the mobile terminal 100 and the email server 200 is cancelled and the mobile terminal 100 and the email server 200 remain disconnected from each other until the push email function is activated in the embodiment described below. However, the present invention is not limited thereto. If the push email function is deactivated, the mobile terminal 100 may operate in the polling mode in which the mobile terminal 100 is connected to the email server 200 periodically or at specific time points to confirm received emails.

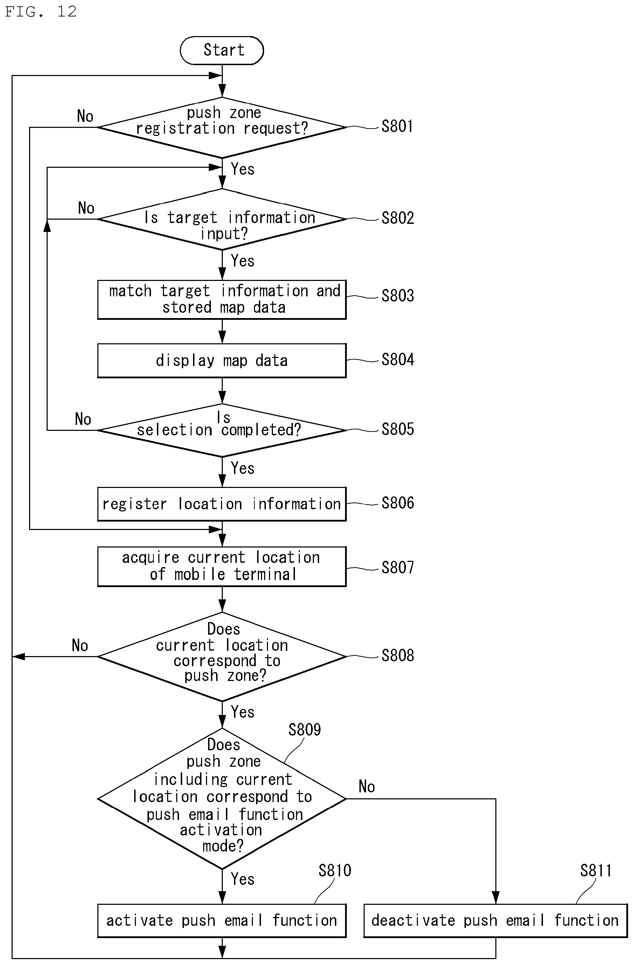

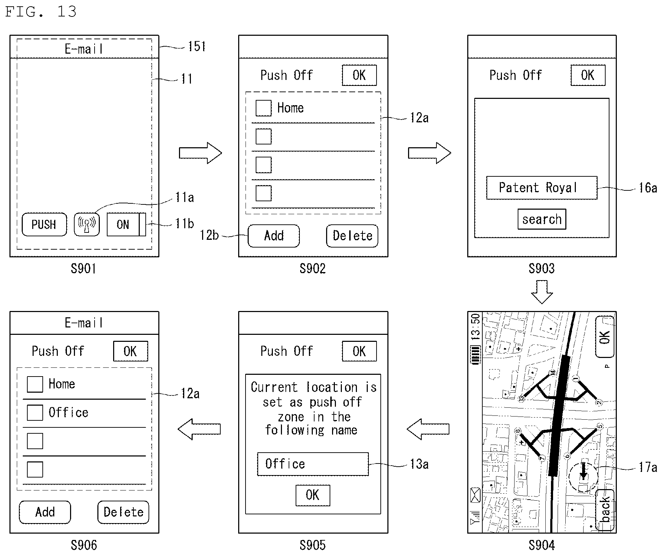

FIGS. 12 and 13 illustrate the method of providing email services in the mobile terminal 100 according to the fifth exemplary embodiment. In FIG. 12, operations S807 through S811 are identical to operations S504 through S508 in the method of providing email services in the mobile terminal according to the fourth exemplary embodiment, and thus, detailed explanations thereof are omitted.

Referring to FIGS. 1 and 12, when the user inputs a push zone registration request through the user input unit 130 (S801), the controller 180 displays a screen for receiving target information used to search map data for a push zone that the user wants to register through the display 151. When the target information is received from the user through the user input unit 130 (S802), the controller 180 matches the input target information to the map data stored in the memory 160 to acquire a specific location (S803). Then, the controller 180 displays the map data and the acquired location is indicated on the displayed map data (S804). That is, the location corresponding to the received target information is indicated on the map data.

When the location indicated on the map data is selected as a push zone (S805), the controller 180 registers location information about the location acquired by matching the target information input by the user to the map data in the location information database (S806). That is, the location acquired by matching the target information input by the user to the map data is registered as the push zone.

Referring to FIG. 13, when the user selects the GPS icon 11a on the email setting screen 11 (S901), the push zone list 12a registered in the location information database is displayed through the display 151 (S902). When the user selects the "Add" icon 12b on the screen displaying the push zone list 12a, a search window 16a for receiving location identification, which is used for searching the map data for a push zone to be newly registered, is displayed through the display 151 (S903).

When the target information, for example "Patent Royal" is received from the user through the search window 16a, the controller 180 matches the input target information to the map data stored in the memory 160 to acquire a location. An image of map data on which the acquired location is indicated is displayed through the display 151 (S904). Here, the map data may be displayed such that the location searched based on the target information input by the user is indicated by a location indication icon 17a.

When the user who confirms the location indicated on the map data is selected as the push zone to be newly registered, the input window 13a, through which the name of the push zone to be newly registered is received, is displayed through the display 151 (S905). When the name of the push zone to be newly registered, for example "Office," is received from the user through the input window 13a, the new location information is registered in the location information database and the updated push zone list 12a including the newly registered push zone is displayed through the display 151 (S906). Here, the activation information of the newly registered push zone may be set such that the activation information corresponds to a mode that is different from the default mode of the push email function.

Although the map data is searched to set the push zone in this embodiment, the present invention is not limited thereto. The map data may be divided into multiple areas and displayed through the display 151, and one of the areas may be selected as a push zone when the user selects the area.

A method of providing email services in a mobile terminal according to a sixth exemplary embodiment and an operation of the mobile terminal 100 for implementing the method will now be explained. The sixth exemplary embodiment may be implemented in the mobile terminal 100 described with reference to FIGS. 1 and 7.

When the push email function is deactivated, the connection between the mobile terminal 100 and the email server 200 is cancelled, and the mobile terminal 100 and the email server 200 remain disconnected until the push email function is activated in the embodiment described below. However, the present invention is not limited thereto. If the push email function is deactivated, the mobile terminal 100 may operate in the polling mode in which the mobile terminal 100 is connected to the email server 200 periodically or at specific time points to confirm received email.

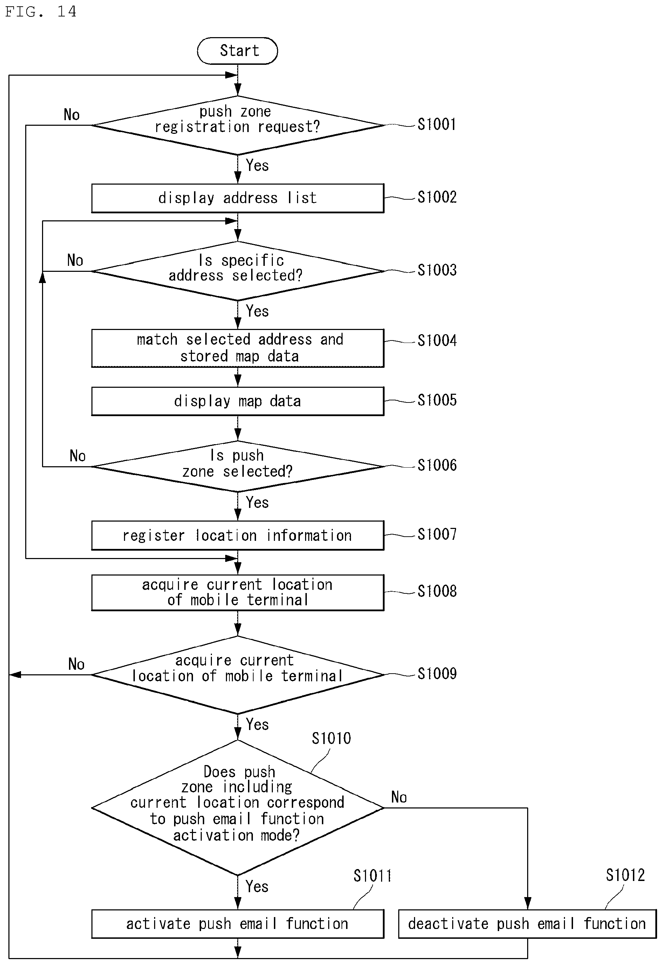

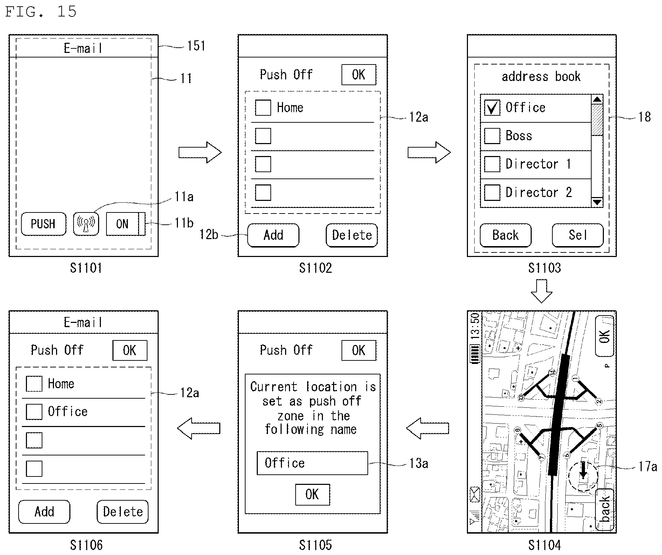

FIGS. 14 and 15 illustrate the method of providing email services in the mobile terminal 100 according to the sixth exemplary embodiment. In FIG. 14, operations S1008 through S1012 are identical to operations S504 through S508 in the method of providing email services in the mobile terminal according to the fourth exemplary embodiment, and thus, detailed explanations thereof are omitted.

Referring to FIGS. 1 and 14, when a push zone registration request is received through the user input unit 130, the controller 180 reads address information from an address database stored in the memory 160 and displays an address list including the read address information through the display 151 (S1002). When specific address information is selected from the displayed address list (S1003), the controller 180 matches the selected address information to the map data stored in the memory 160 and acquires a specific location from the matching result (S1004). Subsequently, the controller 180 displays the map data and indicates the acquired location on the displayed map data (S1005). That is, the location corresponding to the selected address information is indicated on the map data.

When the location indicated on the map data is selected as a push zone (S1006), the controller 180 registers location information corresponding to the selected location in the location information database (S1007). That is, the location corresponding to the address selected by the user is registered as the push zone.

Referring to FIGS. 1 and 15, when the user selects the GPS icon 11a on the email setting screen 11 (S1101), the push zone list 12a registered in the location information database is displayed through the display 151 (S1102). When the user selects the "Add" icon 12b on the screen displaying the push zone list 12a, an address list 18 or "address book" including addresses stored in the address database is displayed through the display 151 (S1103).

When a specific address, for example "Office" is selected by the user from the address list 18, the controller 180 matches the selected address to the map data stored in the memory 160 and displays an image of map data on which a location acquired by the matching is indicated through the display 151 (S1104). Here, the location corresponding to the address selected by the user may be indicated by the location indication icon 17a on the map data.

When the user who confirms the location indicated on the map data is selected as a push zone to be added, the input window 13a, through which the name of the push zone to be added is received, is displayed through the display 151 (S1105). Here, the name of the address, for example "Office," selected as the push zone by the user may be displayed by default.

When the name of the push zone to be added is received from the user through the input window 13a, location information on the location corresponding to the address selected as the push zone is registered in the location information database and the updated push zone list 12a, including the added push zone, "Office," is displayed through the display 151 (S1106). Here, the activation information of the added push zone may be set such that the activation information corresponds to a mode that is different from the default mode of the push email function.

A method of providing email services in a mobile terminal according to a seventh exemplary embodiment and an operation of the mobile terminal 100 for implementing the method will now be explained. The seventh exemplary embodiment may be implemented in the mobile terminal 100 described with reference to FIGS. 1 and 7.

When the push email function is deactivated, the connection between the mobile terminal 100 and the email server 200 is cancelled and the mobile terminal 100 and the email server 200 remain disconnected until the push email function is activated in this embodiment. However, the present invention is not limited thereto. If the push email function is deactivated, the mobile terminal 100 may operate in the polling mode in which the mobile terminal 100 is connected to the email server 200 periodically or at specific time points to confirm received email.

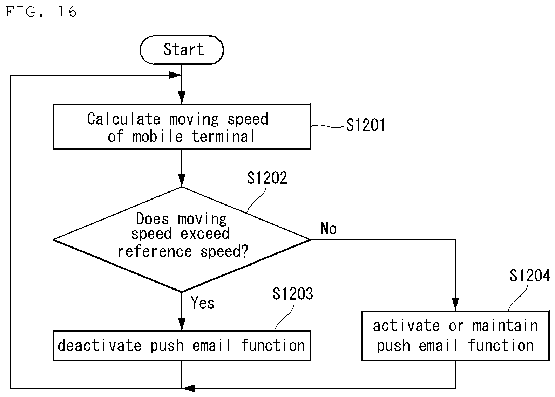

FIG. 16 illustrates the method of providing email services in the mobile terminal 100 according to the seventh exemplary embodiment. Referring to FIGS. 1 and 16, the controller 180 continuously confirms and acquires the current location of the mobile terminal 100 through the location information module 115. Then, the controller 180 calculates a moving speed of the mobile terminal 100 based on the continuously acquired current location of the mobile terminal 100 (S1201).

The controller 180 compares the moving speed of the mobile terminal 100 with a reference speed (S1202) and deactivates the push email function when the moving speed exceeds the reference speed (S1203) such that the connection between the mobile terminal 100 and the email server 200 shown in FIG. 7 is cancelled. If the moving speed of the mobile terminal 100 is lower than the reference speed, the controller 180 activates the push email function (1204) such that the connection between the mobile terminal 100 and the email server 200 shown in FIG. 7 is maintained.

According to the fourth, fifth, sixth and seventh exemplary embodiments, the push email function of the mobile terminal 100 is deactivated in an area determined by the user to be a region requiring no email push and activated in an area determined by the user to be a region requiring email push. Thus, power consumption to maintain unnecessary connection between the mobile terminal 100 and the email server 200 is minimized. Furthermore, the push email function is deactivated when the user cannot check email, for example, when the user is driving a car, such that unnecessary power consumption of the mobile terminal 100 can be reduced.

When the push email function is deactivated, the connection between the mobile terminal 100 and the email server 200 is cancelled and the mobile terminal 100 and the email server 200 remain disconnected until the push email function is activated in the fourth, fifth, sixth and seventh exemplary embodiments described above. However, the present invention is not limited thereto. When the push email function is deactivated, the mobile terminal 100 may operate in the polling mode in which the mobile terminal 100 is connected to the email server 200 periodically or at specific time points to check received email.

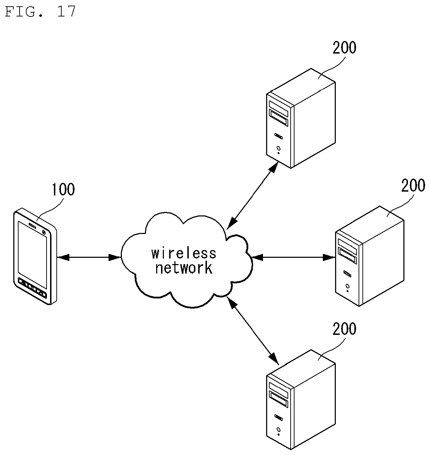

FIG. 17 illustrates another exemplary service network related to exemplary embodiments. Referring to FIG. 17, the mobile terminal 100 is connected to one or more email servers 200 through a wireless network and provides one or more push email services.

Each email server 200 pushes emails delivered to an email account registered by the user to the mobile terminal 100. The mobile terminal 100 needs to maintain the connection with the email servers 200 continuously to provide the push email services. However, the connection that is not used for longer than a predetermined time in a wireless network is forcibly terminated by network elements such as a serving GPRS supporting node (SGSN), a gateway GPRS supporting node (GGSN), and a packet data service node (PDSN).

Accordingly, the mobile terminal 100 periodically transmits a message such as a ping message, a health check message or a heartbeat message to an email server 200 that does not push emails for a predetermined time. Here, the time when the mobile terminal 100 transmits a message for maintaining the connection with each email server 200 to each email server 200 is determined based upon a transmission period predetermined by the corresponding push email service.

A method of providing email services in a mobile terminal according to an eighth exemplary embodiment and an operation of the mobile terminal 100 for implementing the method will now be explained. The eighth exemplary embodiment may be implemented in the mobile terminal 100 described with reference to FIGS. 1 and 17.

In this embodiment, the ping message is periodically transmitted from the mobile terminal 100 to the email server 200 to maintain the connection between the mobile terminal 100 and the email server 200. However, the present invention is not limited thereto. The health check message, heartbeat message, and other messages, instead of the ping message, may be transmitted.

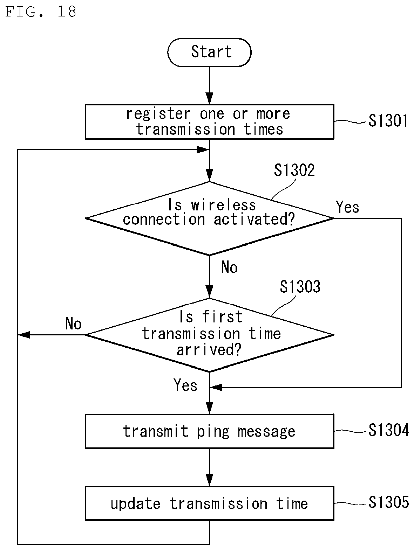

FIGS. 18, 19, 20 and 21 illustrate the method of providing email services in the mobile terminal 100 according to the eighth exemplary embodiment. Referring to FIGS. 1, 17 and 18, the controller 180 registers transmission times when the ping message is transmitted to one or more email servers 200 that do not push emails for longer than a predetermined time (S1301). Here, the transmission time when the ping message is transmitted to each email server 200 is determined based on the last time when the email server 200 pushed an email and a transmission period previously set according to the push email service provided by the email server 200.

For example, if a ping message transmission period set by the push email service corresponding to the email server 200 to which the ping message will be transmitted is twenty minutes and the last time when the email server 200 pushed an email is ten o'clock, the next ping message transmission time is twenty minutes past ten o'clock. The ping message transmission time of each email server 200 is set depending on the push email service provided by each email server 200.

The controller 180 confirms whether data is transmitted/received through the wireless communication unit 110 to activate wireless connection (S1302). When the wireless connection is not activated and one of the transmission times set in S1301 arrives (S1303), the ping message is transmitted to all the email servers 200 (S1304). That is, the controller 180 synchronizes the transmission times with respect to all the email servers 200 such that the ping message is transmitted at the transmission time that arrived first among the registered transmission times. The controller 180 updates the ping message transmission times with respect to all the email servers 200 after the ping message has been transmitted (S1305). Here, the updated transmission times for transmitting the ping message to the respective email servers 200 correspond to times after a lapse of predetermined transmission periods from the times when the ping message has been transmitted.

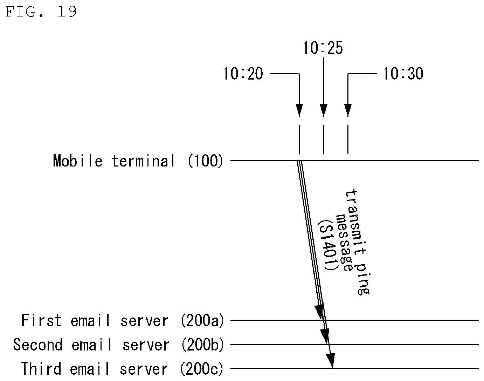

For example, referring to FIG. 19, if a ping message transmission time with respect to a first email server 200a is twenty minutes past ten o'clock, a ping message transmission time with respect to a second email server 200b is twenty-five minutes past ten o'clock, and a ping message transmission time with respect to a third email server 200c is thirty minutes past ten o'clock, the controller 180 transmits the ping message to all of the first, second and third email servers 200a, 200b and 200c at twenty minutes past ten o'clock (S1401). That is, the controller 180 synchronizes the ping message transmission times of the second and third email servers 200b and 200c with the ping message transmission time of the first email server 200a.

Then, the controller 180 updates the ping message transmission times with respect to the first, second and third email servers 200a, 200b and 200c. If ping message transmission periods respectively corresponding to the first, second and third email servers 200a, 200b and 200c are twenty minutes, twenty-five minutes, and thirty minutes, the controller 180 updates the ping message transmission times with respect to the first, second and third email servers 200a, 200b and 200c such that the updated ping message transmission times are forty minutes past ten o'clock, fifty minutes past ten o'clock, and eleven o'clock, respectively.

Referring back to FIG. 18, when the wireless connection is activated (S1302), the controller 180 transmits the ping message to all the email servers 200a, 200b and 200c irrespective of the registered ping message transmission times of each of the email servers 200a, 200b and 200c (S1304) and updates the ping message transmission times with respect to the email servers 200a, 200b and 200c to which the ping messages have been transmitted (S1305). Here, the wireless connection may be activated by the push email service or applications other than the push email service.

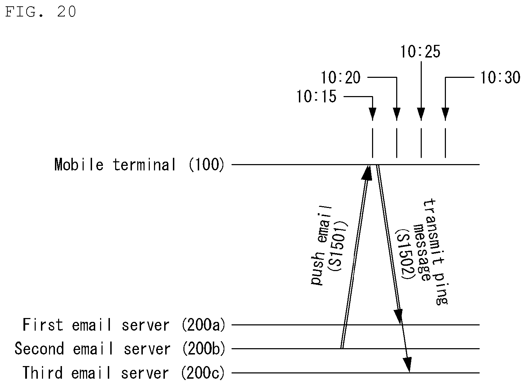

For example, emails may be pushed from an email server 200 connected through the wireless communication unit 110 to activate the wireless connection. FIG. 20 illustrates a case where an email is pushed from an email server 200 to activate the wireless connection. Referring to FIG. 20, when the ping message transmission times with respect to the first, second, and third email servers 200a, 200b and 200c are twenty minutes past ten o'clock, twenty-five minutes past ten o'clock, and thirty minutes past ten o'clock, respectively, and an email is pushed from the second email server 200b at fifteen minutes past ten o'clock (S1501), the controller 180 does not wait until twenty minutes past ten o'clock and transmits the ping message to the first and third email servers 200a and 200c which do not push emails (S1502). Then, the controller 180 updates the ping message transmission times with respect to the first and third email servers 200a and 200c.

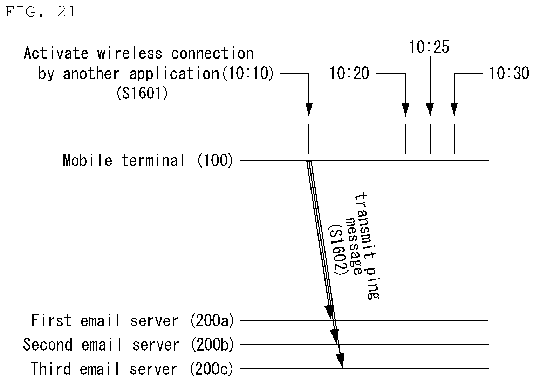

Furthermore, data may be transmitted/received through the wireless communication unit 110 according to an application other than the push email service to activate the wireless connection. FIG. 21 illustrates a case where the wireless connection is activated by an application other than the push email service. Referring to FIG. 21, when the ping message transmission times with respect to the first, second, and third email servers 200a, 200b and 200c are twenty minutes past ten o'clock, twenty-five minutes past ten o'clock, and thirty minutes past ten o'clock, respectively, and the wireless connection is activated by an application other than the push email service at ten minutes past ten o'clock (S1601), the controller 180 does not wait until twenty minutes past ten o'clock and transmits the ping message to the first, second, and third email servers 200a, 200b and 200c which do not push emails at ten minutes past ten o'clock (S1602). Furthermore, the controller 180 updates the ping message transmission times with respect to the first, second, and third email servers 200a, 200b and 200c.

According to the eighth exemplary embodiment described above, the message transmission interval for maintaining the connection between the mobile terminal 100 and the email server 200 is adjusted to be maximized so as to guarantee a time for which the mobile terminal 100 maintains an idle mode. Thus, power consumption of the mobile terminal 100 can be minimized.

The above-described method of providing email service of the mobile terminal may be written as computer programs and may be implemented in digital microprocessors that execute the programs using a computer readable recording medium. The method of providing email service of the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided for controlling a mobile terminal by displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100) comprising:
a wireless communication unit (112) configured to communicate with an email server (200) according to an email receiving mode comprising a push mode and a polling mode; and
a controller (180) configured to:
automatically switch from the push mode to the polling mode or from the polling mode to the push mode, based on a number of times emails are received during a predetermined time from the email server (200),
wherein the mobile terminal (100) is continuously connected to the email server (200) in the push mode, and the mobile terminal (100) is periodically connected to and disconnected from the email server (200) in the polling mode.

2. The mobile terminal (100) of claim 1, **characterized in that** the controller (180) is further configured to determine whether the email receiving mode is to be switched from the push mode to the polling mode or from the polling mode to the push mode based on the current email receiving mode, and on whether email has been received in the current mode.

3. The mobile terminal (100) of any one of claims 1 or 2, **characterized in that** the controller (180) is further configured to control the switching between the push mode and the polling mode based on a statistic of emails received from the email server (180).

4. The mobile terminal (100) of claim 3, **characterized in that** the controller (180) is further configured to switch from the push mode to the polling mode based on a frequency of receiving emails from the email server (200), such that the email delivery mode is switched to the polling mode when a number of times emails are received in the push mode from the email server (200) during a predetermined time decreases and the number is less than a predetermined number.

5. The mobile terminal (100) of any one of claims 3 or 4, **characterized in that** it further comprises a memory (160) configured to store a database for managing an average number of times emails are received from the email server (200) during each of a plurality of time periods, wherein the controller (180) is further configured to control the switching between the push mode and the polling mode with reference to the database.

## Patentansprüche

1. Mobiles Endgerät (100), mit:
einer Drahtloskommunikationseinheit (112), die dafür konfiguriert ist, mit einem E-Mail-Server (200) gemäß einem E-Mail-Empfangsmodus zu kommunizieren, der einen Push-Modus und einen Polling-Modus aufweist; und
einer Steuereinheit (180), die dafür konfiguriert ist, basierend auf einer Anzahl von Malen, die E-Mails während einer vorgegebenen Zeit vom E-Mail-Server (200) empfangen werden, automatisch vom Push-Modus auf den Polling-Modus oder vom Polling-Modus auf den Push-Modus umzuschalten,
wobei das mobile Endgerät (100) im Push-Modus kontinuierlich mit dem E-Mail-Server (200) verbunden ist, und wobei das mobile Endgerät (100) im Polling-Modus periodisch mit dem E-Mail-Server (200) verbunden und von diesem getrennt wird.

2. Mobiles Endgerät (100) nach Anspruch 1, **dadurch gekennzeichnet, dass** die Steuereinheit (180) ferner dafür konfiguriert ist, basierend auf dem aktuellen E-Mail-Empfangsmodus und darauf, ob im aktuellen Modus eine E-Mail empfangen worden ist, zu bestimmen, ob der E-Mail-Empfangsmodus vom Push-Modus auf den Polling-Modus oder vom Polling-Modus auf den Push-Modus umgeschaltet werden soll.

3. Mobiles Endgerät (100) nach Anspruch 1 oder 2, **dadurch gekennzeichnet, dass** die Steuereinheit (180) ferner dafür konfiguriert ist, das Umschalten zwischen dem Push-Modus und dem Polling-Modus basierend auf einer Statistik von vom E-Mail-Server (180) empfangenen E-Mails zu steuern.

4. Mobiles Endgerät (100) nach Anspruch 3, **dadurch gekennzeichnet, dass** die Steuereinheit (180) ferner dafür konfiguriert ist, basierend auf einer Häufigkeit des Empfangs von E-Mails vom E-Mail-Server (200) vom Push-Modus auf den Polling-Modus umzuschalten, so dass der E-Mail-Sendemodus auf den Polling-Modus geschaltet wird, wenn eine Anzahl von Malen, die E-Mails während einer vorgegebenen Zeit im Push-Modus vom E-Mail-Server (200) empfangen werden, abnimmt und die Anzahl kleiner ist als eine vorgegebene Anzahl.

5. Mobiles Endgerät (100) nach Anspruch 3 oder 4, **dadurch gekennzeichnet, dass** es ferner einen Speicher (160) aufweist, der dafür konfiguriert ist, eine Datenbank zum Verwalten einer durchschnittlichen Anzahl von Malen zu speichern, die E-Mails während jeder von mehreren Zeitperioden vom E-Mail-Server (200) empfangen werden, wobei die Steuereinheit (180) ferner dafür konfiguriert ist, das Umschalten zwischen dem Push-Modus und dem Polling-Modus mit Bezug auf die Datenbank zu steuern.

## Revendications

1. Terminal mobile (100), comprenant :
une unité de communication sans fil (112) configurée pour communiquer avec un serveur de courrier électronique (200) selon un mode de réception de courrier électronique comprenant un mode de pousser et un mode d'interrogation ; et
un dispositif de commande (180) configuré pour :
automatiquement commuter du mode de pousser au mode d'interrogation ou du mode d'interrogation au mode de pousser, sur la base d'un nombre de fois que des courriers électroniques sont reçus, durant un temps prédéterminé, du serveur de courrier électronique (200),
dans lequel le terminal mobile (100) est connecté en continu au serveur de courrier électronique (200) dans le mode de pousser, et le terminal mobile (100) est périodiquement connecté au et déconnecté du serveur de courrier électronique (200) dans le mode d'interrogation.

2. Terminal mobile (100) selon la revendication 1, **caractérisé en ce que** le dispositif de commande (180) est en outre configuré pour déterminer si le mode de réception de courrier électronique doit être commuté du mode de pousser au mode d'interrogation ou du mode d'interrogation au mode de pousser sur la base du mode actuel de réception de courrier électronique, et du fait qu'un courrier électronique a été reçu ou non dans le mode actuel.

3. Terminal mobile (100) selon l'une quelconque des revendications 1 ou 2, **caractérisé en ce que** le dispositif de commande (180) est en outre configuré pour commander la commutation entre le mode de pousser et le mode d'interrogation sur la base d'une statistique de courriers électroniques reçus du serveur de courrier électronique (180).

4. Terminal mobile (100) selon la revendication 3, **caractérisé en ce que** le dispositif de commande (180) est en outre configuré pour commuter du mode de pousser au mode d'interrogation sur la base d'une fréquence de réception de courriers électroniques en provenance du serveur de courrier électronique (200), de telle sorte que le mode de livraison de courrier électronique soit commuté au mode d'interrogation lorsqu'un nombre de fois que des courriers électroniques sont reçus, dans le mode de pousser, du serveur de courrier électronique (200) durant un temps prédéterminé diminue et le nombre soit inférieur à un nombre prédéterminé.

5. Terminal mobile (100) selon l'une quelconque des revendications 3 ou 4, **caractérisé en ce qu'**il comprend en outre une mémoire (160) configurée pour stocker une base de données pour gérer un nombre moyen de fois que des courriers électroniques sont reçus du serveur de courrier électronique (200) durant chacune parmi une pluralité de périodes, dans lequel le dispositif de commande (180) est en outre configuré pour commander la commutation entre le mode de pousser et le mode d'interrogation en référence à la base de données.
